(19) Europäisches Patentamt European Patent Office Office européen des brevets

(11) **EP 4 113 241 B1**

(12) **EUROPEAN PATENT SPECIFICATION**

(45) Date of publication and mention
of the grant of the patent:
**16.08.2023 Bulletin 2023/33**

(21) Application number: **21183223.3**

(22) Date of filing: **01.07.2021**

(51) International Patent Classification (IPC):
**G05D 1/02** (2020.01) **G05D 1/00** (2006.01)

(52) Cooperative Patent Classification (CPC):
**G05D 1/0297; G05D 1/0088; G05D 1/0217;**
G05D 2201/0202; G05D 2201/0213;
G05D 2201/0216

(54) **METHOD AND SYSTEM FOR TRAFFIC CONTROL OF A PLURALITY OF VEHICLES, IN PARTICULAR AUTONOMOUS VEHICLES**

VERFAHREN UND SYSTEM ZUR STEUERUNG EINER VIELZAHL VON FAHRZEUGEN, INSBESONDERE AUTONOMEN FAHRZEUGEN

PROCÉDÉ ET SYSTÈME DE GESTION DE TRAFFIC D'UNE PLURALITÉ DE VÉHICULES, EN PARTICULIER DE VÉHICULES AUTONOMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2023 Bulletin 2023/01**

(73) Proprietor: **Volvo Autonomous Solutions AB 405 08 Göteborg (SE)**

(72) Inventor: **HELLGREN, Jonas**
**413 16 Göteborg (SE)**

(74) Representative: **Kransell & Wennborg KB**
**P.O. Box 2096**
**403 12 Göteborg (SE)**

(56) References cited:
**WO-A2-2015/011661** **US-A- 5 488 277**

- **DIGANI VALERIO ET AL: "Coordination of multiple AGVs: a quadratic optimization method", AUTONOMOUS ROBOTS, KLUWER ACADEMIC PUBLISHERS, DORDRECHT, NL, vol. 43, no. 3, 7 April 2018 (2018-04-07), pages 539-555, XP036725080, ISSN: 0929-5593, DOI: 10.1007/S10514-018-9730-9 [retrieved on 2018-04-07]**
- **CHEN TIANJIAN JIAN ET AL: "On the Shortest and Conflict-Free Path Planning of Multi-AGV System Based on Dijkstra Algorithm and the Dynamic Time-Window Method", ADVANCED MATERIALS RESEARCH, vol. 645, 11 January 2013 (2013-01-11), pages 267-271, XP055861753, DOI: 10.4028/www.scientific.net/AMR.645.267 Retrieved from the Internet: URL:http://pdf.xuebalib.com:1262/5th26uhpv TZK.pdf>**

**EP 4 113 241 B1**

## Description

### TECHNICAL FIELD

The present disclosure relates to the field of centralized vehicle control, and in particular to a traffic planner for commanding autonomous vehicles in an environment with waypoints and connecting road segments.

### BACKGROUND

A fleet of autonomous vehicles can be controlled in a distributed (individual) or in a centralized (groupwise) fashion. Centralized control may be advantageous when the vehicles are to operate in a closed environment, especially when space is limited, and/or when the vehicles are carrying out a common utility task. Under the centralized control paradigm, tactical decisions, with a typical horizon of the order of minutes, are entrusted to a so-called traffic planner. The traffic planner reads current vehicle positions and other relevant state variables of the traffic system and determines commands to be given to each vehicle at times within a planning horizon. The traffic planner may be instructed to determine the commands with a view to maximizing productivity while minimizing cost, and the fleet owner can express the desired balance between these goals by configuring weighting coefficients. Decision-making on a shorter timescale than the tactical one, including vehicle stabilization and collision avoidance, may be delegated to each vehicle.

For example, US2020097022 discloses a method for forming motion plans for a plurality of mobile objects movable in a system of nodes. The method is arranged to select motion plans that minimize a total movement cost for all mobile objects while considering a route collision evaluation value of a combination for the shortest route and the detour route for each mobile object. The movement cost is the sum of a distance cost and a waiting cost.

An inconvenience encountered in some centrally controlled vehicle systems is that some vehicles occasionally end up in positions where they block the movement of another vehicle or form queues, which keep vehicles from moving at full speed. A state where none of the vehicles in the system can move is referred to as a deadlock (or terminal) state. This may correspond to a real-life scenario where the controlled vehicles need external help to resume operation, such as operator intervention, towing etc.

XP036725080 (V. Digani et al.: "Coordination of multiple AGVs: a quadratic optimization method", Autonomous Robots, vol. 43 (2018), no. 3, pages 539-555) discloses a traffic planning method with the features of the preamble of claim 1. In relation to XP036725080, a problem is to decrease the likelihood of leading the vehicles into mutually blocking states, particularly deadlock states.

US5488277A discloses a mobile robot configured to navigate with the aid of indicia means associated with a desired travel path.

XP055861753 (T. Chen et al., On the Shortest and Conflict-Free Path Planning of Multi-AGV System Based on Dijkstra Algorithm and the Dynamic Time-Window Method", Advanced Materials Research, vol. 645 (2013), pages 267-271) discloses a dynamic routing method for automated guided vehicles (AGVs) which utilizes Dijkstra's algorithm and the dynamic time-window method.

WO2015011661A1 discloses a device for optimizing the movement of AGVs. The device comprises a traffic management module configured to manage the movement of some AGVs on routes of a graph defined by segments and nodes connecting the segments.

### SUMMARY

An objective of the present disclosure is to make available a traffic controller with a decreased likelihood of leading the vehicles into mutually blocking states, particularly deadlock states. The traffic planer should preferably be suitable for the control of autonomous vehicles. It is a further objective to provide a traffic planner which can be implemented with a limited amount of processing power. A still further objective is to propose a traffic planning method with these or corresponding characteristics.

At least some of these objectives are achieved by the invention as defined by the independent claims. The dependent claims define advantageous embodiments.

In a first aspect of the invention, there is provided a traffic planning method for controlling a plurality of vehicles, wherein each vehicle occupies one node in a shared set of planning nodes and is movable to other nodes along predefined edges between pairs of the nodes in accordance with a finite set of motion commands. In this method, initial node occupancies of the vehicles are obtained, and a sequence of motion commands is determined by optimizing a state-action value function $Q(s, a) = Q_S(s, a) + Q_L(s)$ which depends on node occupancies s and the motion commands $a$ to be given. According to the first aspect, the objective function includes at least one command-independent term $Q_L(s)$, which penalizes node occupancies with too small inter-vehicle gaps, and at least one command-dependent term $Q_S(s, a)$.

The inventor has realized that small inter-vehicle gaps are strongly related to the formation of queues, blocking

2

states and/or deadlocks in a traffic system. The described method, where the motion commands are determined subject to a penalty on too small gaps, is less likely to produce such states. This may reduce the number of delaying incidents and generally favors smoother operation of the vehicles. The first aspect of the invention furthermore proposes a computationally efficient way of putting this realization to technical practice. This is because the splitting of the state-action value function into two parts (terms), from which one is independent of the commands $a$ to be given, allows more focused updating of the state-action value function. The common practice in reinforcement learning of updating the state-action value function in each iteration in accordance with a reward function is recalled. Since the command-independent term of the state-action value function can be exempted from such updating, the present traffic planning method can be executed with a reduced need for computational resources in comparison with a straightforward reference implementation.

In some embodiments, an inter-vehicle gap which the command-independent term $Q_L(s)$ penalizes is expressed as a time separation of the vehicles in the direction of movement. Accordingly, the inter-vehicle gap depends not only on the physical separation of the vehicles but also on their speeds. This reflects the reaction time which is available to avoid an undesired or potentially dangerous situation.

In some embodiments, the command-independent term $Q_L(s)$ depends on a gap-balancing indicator $SoB(s)$, which penalizes too small gaps. Alternatively or additionally, the gap-balancing indicator $SoB(s)$ penalizes unevenly distributed gaps. For this purpose, the gap-balancing indicator $SoB(s)$ may include a variability measure on the gap sizes, as detailed below. The command-independent term $Q_L(s)$ may further include composition with a smooth activation function, such as ReLU, sigmoid or gaussian. This may improve the stability of the traffic planner's control activities.

In some embodiments, the state-action value function is obtained by a preceding step of reinforcement learning on the basis of a predefined reward function. The reward function may be identical to the reward function used in the updating step.

In some embodiments, the vehicles are autonomous vehicles, in particular self-driving vehicles.

In a second aspect of the present invention, there is provided a device (e.g., traffic planner) configured to control a plurality of vehicles, wherein each vehicle occupies one node in a shared set of planning nodes and is movable to other nodes along predefined edges between pairs of the nodes in accordance with a finite set of motion commands. The device has a first interface configured to receive initial node occupancies of the vehicles; a second interface configured to feed motion commands selected from said finite set to said plurality of vehicles; and processing circuitry configured to perform the above method.

On a general level, the second aspect of the invention shares the effects and advantages of the first aspect, and it can be implemented with a corresponding degree of technical variation.

The invention further relates to a computer program containing instructions for causing a computer (e.g., traffic planner) to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and nonpermanent storage media of magnetic, optical or solid-state type. Still within the scope of "data carrier", such memories may be fixedly mounted or portable.

In the vocabulary of the present disclosure, a "planning node" may refer to a resource which is shared among the vehicles, such as a waypoint or a road segment. Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

## BRIEF DESCRIPTION OF THE DRAWINGS

Aspects and embodiments are now described, by way of example, with reference to the accompanying drawings, on which:

figure 1 is a flowchart of a traffic planning method according to embodiments of the present invention;

figure 2 shows a device suitable for controlling a plurality of vehicles;

figures 3 and 4 are schematical representations of road networks with numbered waypoints;

figure 5 shows example vehicles that can be controlled centrally using embodiments of the invention; and

figure 6 is a flowchart of a reinforcement learning algorithm.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

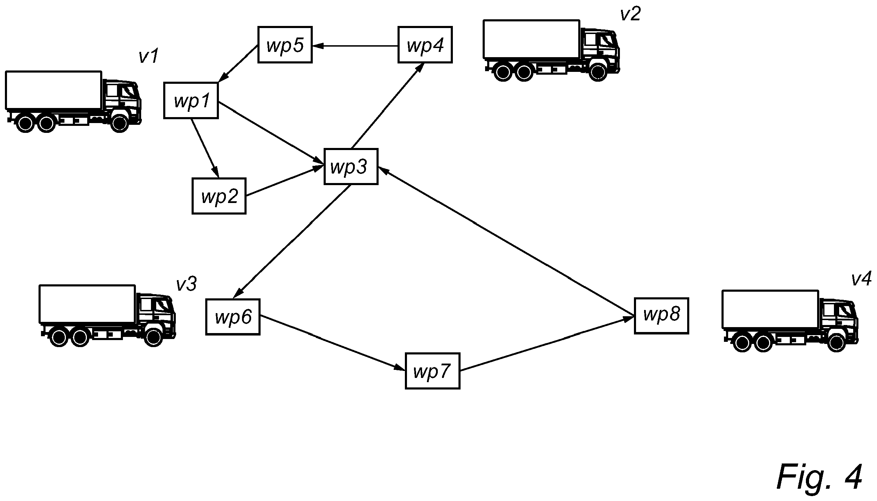

Figure 4 is a schematic representation of a road network. Waypoints are defined at the road junctions wp1, wp3 and additionally at some intermediate locations wp2, wp4, wp5, ..., wp8. Some of the intermediate locations may correspond to so-called absorption nodes, where a visiting vehicle is required to dwell for a predetermined or variable time, for purposes of loading, unloading, maintenance etc. The arrangement of the waypoints is not essential to the present invention, rather their locations and number may be chosen (defined) as deemed necessary in each use case to achieve smooth and efficient traffic control. The waypoints are treated as planning nodes which are shared by a plurality of vehicles v1, v2, v3, v4. Abstractly, a planning node may be understood as a logical entity which is either free or occupied by exactly one vehicle at a time. An occupied node is not consumed but can be released for use by the same or another vehicle. Planning nodes may represent physical space for transport or parking, a communication channel, maintenance machinery, additional equipment for optional temporary use, such as tools or trailers.

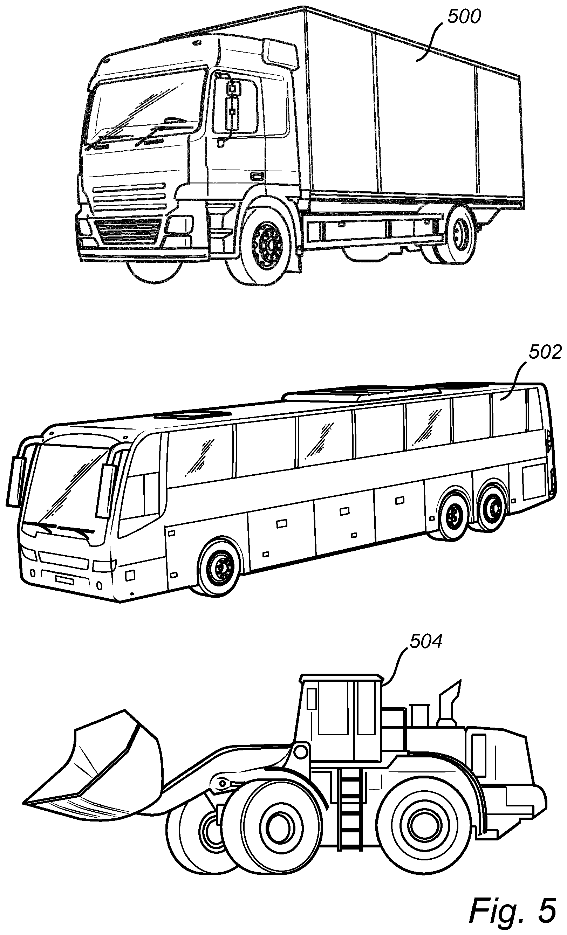

Each vehicle (see figure 5) is controllable by an individual control signal, which may indicate a command from a finite set of predetermined commands. If the vehicles are autonomous, the control signal may be a machine-oriented signal which controls actuators in the vehicle; if the vehicles are conventional, the control signals may be human-intelligible signals directed to their drivers. It is understood that individual control signals may be multiplexed onto a common carrier. A predefined command may represent an action to be taken at the next waypoint (e.g., continue straight, continue right, continue left, stop), a next destination, a speed adjustment, a loading operation or the like. Implicit signaling is possible, in that a command has a different meaning depending on its current state (e.g., toggle between an electric engine and a combustion engine, toggle between high and low speed, drive/wait at the next waypoint). A vehicle which receives no control signal or a neutrally-valued control signal may be configured to continue the previously instructed action or to halt. The predetermined commands preferably relate to tactical decision-making, which corresponds to a time scale typically shorter than strategic decision-making and typically longer than operational (or machine-level) decision-making. Different vehicles may have different sets of commands.

One aim of the present disclosure is to enable efficient centralized control of the vehicles v1, v2, v3, v4. The vehicles v1, v2, v3, v4 are to be controlled as a group, with mutual coordination. The mutual coordination may entail that any planning node utilization conflicts that could arise between vehicles are deferred to a planning algorithm and resolved at the planning stage. The planning may aim to maximize productivity, such as the total quantity of useful transport system work or the percentage of on-schedule deliveries of goods. The planning may additionally aim to minimize cost, including fuel consumption, battery wear, mechanical component wear or the like.

Regarding the planning node utilization conflicts that may arise, it may initially be noted that if each vehicle moves one waypoint per epoch, then no vehicle blocks this movement of any other vehicle for the node occupancies (start state) shown in figure 4. These node occupancies are:

$$O\begin{pmatrix}v1\\v2\\v3\\v4\end{pmatrix}=\begin{pmatrix}wp1\\wp4\\wp6\\wp8\end{pmatrix}.$$

It can also be seen that these node occupancies provide each vehicle with a next waypoint to which it can move in a next epoch. The choice is not arbitrary, however, as both vehicles v1 and v4 may theoretically move to waypoint wp3, but this conflict can be avoided by routing vehicle v1 to waypoint wp2 instead. If the system is evolved in the second manner, that is,

$$O\begin{pmatrix}v1\\v2\\v3\\v4\end{pmatrix}=\begin{pmatrix}wp2\\wp5\\wp7\\wp3\end{pmatrix},$$

then vehicle v4 will block vehicle v1 from moving to the next waypoint wp3. This blocking state temporarily reduces the vehicle system's productivity but will be resolved once vehicle v4 continues to waypoint wp4.

It is easy to realize that the difficulty of the blocking states (as measured, say, by the number of vehicle movements needed to reach a non-blocking state) in a given waypoint topology will increase with the number of vehicles present. The efficiency gain of deploying marginally more vehicles to solve a given utility task in a given environment may therefore be offset by the increased risk of conflicts. A waypoint topology populated with many vehicles may also have more deadlock states, i.e., states where no vehicle movement is possible. As mentioned, a deadlock state may correspond to a real-life scenario where the controlled vehicles need external help to resume operation, such as operator intervention, towing etc.

The following description is made under an assumption of discrete time, that is, the traffic system evolves in evenly spaced epochs. The length of an epoch may be of the order of 0.1 s, 1 s, 10 s or longer. At each epoch, either a command a1, a2 is given to one of the vehicles v1, v2, v3, v4, a command is given to a predefined group of vehicles, or no command is given. Quasi-simultaneous commands v1.a1, v2.a1 to two vehicles v1, v2 or two vehicle groups can be distributed over two consecutive epochs. To allow approximate simultaneity, the epoch length may be configured shorter than the typical time scale of the tactical decision-making for one vehicle. With this setup, the space of possible planning outcomes corresponds to the set of all command sequences of length d, where d is the planning horizon (or lookahead horizon).

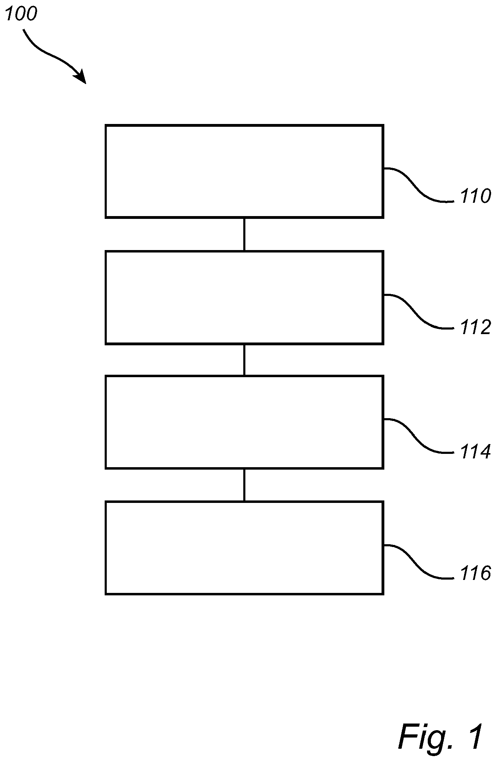

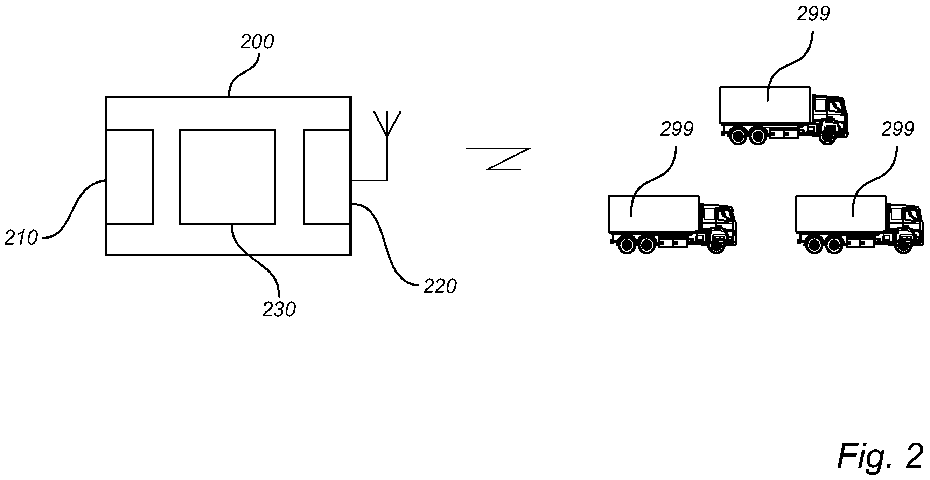

With reference now to figure 1, a traffic planning method 100 according to one embodiment of the invention will be described. The method 100 may be implemented by a general-purpose programmable computer, or in particular by the device 200 shown in figure 2 to be described below.

In a first step 110 of the method 100, a state-action value function $Q(s, a) = Q_S(s, a) + Q_L(s)$ is obtained by executing a reinforcement learning scheme, including training. The type of reinforcement learning scheme may for example be Q-learning or temporal-difference learning on the basis of a predefined reward function $R(s, a)$; see R. S. Sutton et al., Reinforcement Learning, MIT Press (2018), ISBN 9780262039246. The reward function $R(s,a)$ may represent productivity minus cost. The productivity term(s) or factor(s) may be an (approximate) quantitative indicator of the amount of the utility task which is completed by the vehicles' movements. It may be a measure of the total distance travelled (e.g., vehicle-kilometers), total distance travelled by vehicles carrying payload, a passenger-distance measure (e.g., passenger-kilometers), a payload-distance measure (e.g., ton-kilometers), a payload quantity delivered to an intended recipient or the like. The cost term(s) or factor(s) in the reward function $R(s, a)$ may reflect energy consumption, a projected maintenance demand in view of mechanical wear (e.g., total velocity variation, peak acceleration, braking events, number of load cycles on structural elements) or chemical wear (e.g., exposure to sunlight, corrosive fluids) and/or safety risks (e.g., minimum vehicle separation). Suitable training data for the reinforcement learning in step 110 may be obtained by running a large number of computer simulations of traffic based on a mathematical model of the vehicles and planning nodes, e.g., a road-network model. Recorded observations of real vehicle movements in an environment are an alternative source of training data. Hybrids of these are possible too, for instance, to use real-world observations as initial values to the computer simulation.

The state-action value function $Q(s, a)$ obtained in the first step 110 depends on node occupancies s and on motion commands $a$ to be given within the planning horizon. The objective function includes at least one command-independent term $Q_L(s)$, which penalizes node occupancies with too small inter-vehicle gaps, and at least one command-dependent term $Q_S(s, a)$. The command-independent term $Q_L(s)$ and the command-dependent term $Q_S(s, a)$ may respectively represent a long-term and a short-term memory of the traffic planning method 100. It is primarily the command-dependent term $Q_S(s, a)$ that may be obtained by means of reinforcement training according to the reward function $R(s,a)$. The command-dependent term $Q_S(s, a)$ may furthermore be updated after step 110 (training phase) has ended, i.e. in operation, whereas the command-independent term $Q_L(s)$ may remain constant between planning calls.

The command-independent term $Q_L(s)$ may be defined by reference to a gap-balancing indicator $SoB(s)$ which, for a state s, expresses the degree of desirability of the prevailing inter-vehicle gaps as a number. For each vehicle, the inter-vehicle gap may be defined as the distance to the vehicle immediately ahead of it. In the example situation of figure 4, the gap of v3 at wp6 is determined by v4 at wp8, since this is v3's unique direction of movement. The gap may be defined as the number of intervening waypoints, i.e., one (wpy). Vehicle v1 at wp1 can move via wp2 to wp3 or directly to wp3, and from wp3 to either wp4 or wp6. Unless v1's future route is known (e.g., as a result of route planning), a unique gap size among these four options may be determined based on a predefined rule. The rule may stipulate, for example, that the gap-balancing indicator $SoB(s)$ shall be based on the minimum, maximum or average gap across the available routing options. Alternatively, the rule may be based on a predefined standard circuit for traversing the waypoints. Then, even if deviations from the standard circuit are possible and may be justified to avoid a blocking state, only intervening waypoints along the standard circuit are credited as gaps. The standard circuit may correspond to the preferred route for carrying out a utility task, such as loading, unloading or moving.

As mentioned initially, a gap size in the sense of one of these definitions may refer to a distance or a time separation. If time is used to quantify the gap, it may correspond to the time needed for the rear vehicle to reach the momentary position of the vehicle immediately in front ahead of it at the rear vehicle's current speed. Alternatively, the relative speed of the front and rear vehicles may be used as basis. For example, if the front vehicle is moving more slowly, the gap-size time may correspond to the time to collision absent any intervention, and in the opposite case the gap-size time may be set to a maximum value.

The gap-balancing indicator *SoB* according to any of these options provides a convenient basis for determining a suitable sequence of motion commands by optimization. In particular, the gap-balancing indicator *SoB(s)* can be defined so that it assumes values in [0,1], where the value 1 corresponds to a state s such that no further balancing is possible and the value 0 represents the opposite. The gap-balancing indicator *SoB(s)* may purposefully be defined to be 1 if a state s is wellbalanced but not ideally balanced, namely, if the owner of the traffic system does not find it worthwhile or meaningful to spend resources on further intervention aiming to balance the node occupancies of the vehicles.

To mention a few examples, a gap-balancing indicator $SoB_1$ can be constructed based on a standard deviation $D(s)$ of the sizes of the inter-vehicle gaps. The following scaling ensures that $SoB_1$ takes values in [0,1]:

$$SoB_1(s) = \frac{1 - D(s)/D_{max}}{1 + D(s)}$$

where $D_{max} = \max_{s} D(s)$ , the theoretical maximum value of the standard deviation. Viable alternatives to the standard deviation $D(s)$ are variance, variability coefficient, range, interquartile range, and other variability measures. A gap-balancing indicator of this type may cause the method 100 to return motion commands tending to distribute the available total gap size *L* (in time or distance) equally among the vehicles 299.

Another option is to use a gap-balancing indicator $SoB_2$ which is proportional to the minimum gap size among the vehicles 299. A suitable scaling factor for the minimum gap size may be *N/L,* where *L* is the available total gap size and *N* denotes the number of vehicles. This means $SoB_2(s) = 0$ when two vehicles are about to collide and $SoB_2(s) =$ 1 when the gaps are equally distributed.

A further option is to form a weighted combination $SoB_3(s) = \alpha SoB_1(s) + (1 - a)SoB_2(s),$ which maintains the interval [0,1] as its image as long as the parameter satisfies $0 < \alpha < 1$.

In some embodiments, the command-independent term $Q_L(s)$ includes a composition of a gap-balancing indicator *SoB* and a step-like function, such as a smooth activation function. This may improve the stability of the traffic system when controlled by outputs of the method 100. Suitable step-like functions may be a rectified linear unit (ReLU) activation function or modified ReLU

$$Q_L(s) = mReLU(SoB(s); thr, k) = \begin{cases} k(SoB(s) - thr) & SoB(s) < thr \\ 0 & SoB(s) \geq thr \end{cases}$$

where $0 < thr \leq 1$, $k > 0$, a gaussian function (or radial basis function)

$$Q_L(s) = Q_L^{min} e^{-\epsilon \cdot SoB(s)^2}, \qquad \epsilon > 0,$$

a sigmoid function, such as a logistic function

$$Q_L(s) = \frac{1}{1 + e^{-\epsilon \cdot SoB(s)}}, \qquad \epsilon > 0,$$

scaled variants of the above functions, or a combination of these.

An advantageous option is the following combination of two modified ReLUs composed with the above-defined gap-balancing indicators $SoB_1$, $SoB_2$:

$$Q_L(s) = mReLU(SoB_1(s); thr_D, k_D) + mReLU(SoB_2(s); thr_{mingap}, k_{mingap})$$

For a maximally unbalanced state $s_0$, one has $Q_L(s_0) = -k_D thr_D - k_{mingap} thr_{mingap}$. The thresholds $thr_D$, $thr_{mingap}$ represents satisfactory gap balancing, beyond which no further improvement is deemed meaningful or worthwhile. The slopes $k_D$, $k_{mingap}$ are preferably set large enough that the improvement of *SoB* in $Q_L(s)$ outweighs the reward in $Q_S(s, a)$ for moving one vehicle between two waypoints, so that the long-term memory is certain to influence the determination of motion commands. This may be achieved by trial and error, possibly in view of the number of vehicles, geometry of the traffic system and the definition of the reward function $R(s, a)$. This proposed combination of two modified ReLUs is able to manage two desirable goals at once: to maximize the gap spread (i.e., gaps are distributed evenly) and keep vehicles from moving at so small distance that a queue may form.

In a second step 112 of the method 100, the initial node occupancies of the vehicles are obtained. The node occupancies may be represented as a data structure associating each vehicle with a planning node, similar to the occupancy function $O(\cdot)$ introduced above. Ways of obtaining the node occupancies are described below in connection with figure 2.

In a third step 114, a sequence of motion commands $a$ is determined by optimizing the state-action value function $Q(s, a)$. The optimization process may include executing a planning algorithm of any of the types discussed above. It is noted that the optimization process may be allowed to execute until a convergence criterion is met, until an optimality criterion is fulfilled and/or until a predefined time has elapsed. Actually reaching optimality is no necessary condition under the present invention. The optimization process is normally restricted to a planning horizon (or search depth), which may be determined in view of a computational budget (see applicant's co-pending application EP21175955.0) or fixed.

In a fourth step 116 of the method 100, the command-dependent term $Q_S(s, a)$ of the state-action value function $Q(s, a)$ is updated on the basis of the reward function $R(s, a)$ for every iteration of the third step 114. Alternatively, a simplified reward function $\tilde{R}(s, a)$ can be used which largely reflects the same desirables as $R(s, a)$ but is cheaper to evaluate. The command-independent term $Q_L(s)$ is preferably exempted from said iterative updating 116, recalling that its role is to act as long-term memory of the traffic planning method 100. This does not rule out the possibility of adjusting the command-independent term $Q_L(s)$ during ongoing traffic planning, though preferably this is done less frequently than at every execution cycle of the command-determining step 114.

Unlike steps 112, 114, 116, which may collectively be referred to as a *planning call,* the step 110 may constitute a training phase taking place prior to actual operation and need not be repeated after for each commissioned copy of a traffic planner product.

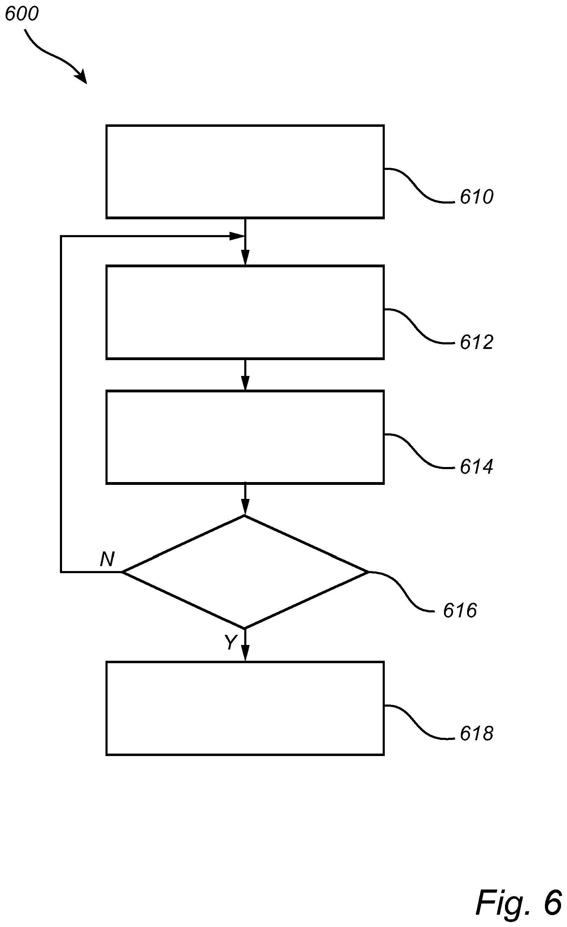

In some embodiments of the method 100, the reinforcement learning step 110 and command-determining step 114 are performed within a Dyna-2 algorithm or an equivalent algorithm. A characteristic of the Dyna-2 algorithm is that learning occurs both while the machine-learning model is being built (training phase) and while it interacts with the system to be controlled. Figure 6 is a flowchart of an example Dyna-2 algorithm 600, which includes the following steps:

- Step 610: A real-world or modelled state $s_0$ is given. What to do?

- Step 612: Short-term search. Use search (e.g., temporal-difference search) to set a parameter vector in a short-term memory with respect to a long-term memory and the present state $s_0$. An action trajectory $a_0$ is created by combining both memories.

- Step 614: Long-term learning. The first action in the action trajectory is executed, which lead to a new state $s_1$ for which an associated reward $R(s_1)$ can be computed. (The reward can depend on the action $a_0$ as well, and/or on the difference between the old and new states.) The short-term memory is updated on the basis of the reward $R(s_1)$, the new state $s_1$ and the old state $s_0$.

- Step 616: It is determined whether the new state $s_1$ is terminal. If not, the execution of the algorithm 600 resumes from step 610 on the basis of the new state $s_1$. Alternatively, if the new state $s_1$ is terminal, the algorithm 600 ends. Here, a terminal state may for example correspond to a deadlock state or to completion of the prescribed utility task.

Figure 2 shows, in accordance with a further embodiment, a device 200 for controlling a plurality of vehicles 299 sharing a set of planning nodes. The device 200, which may be referred to as a traffic planner, has a first interface 210 configured to receive initial node occupancies of the vehicles 299. Optionally, it may further receive, for each vehicle, information representing a set of predefined commands v1.a1, v1.a2, v2.a1, v2.a2, which can be fed to the respective vehicles, and/or a mission (utility task) to be carried out may by the vehicles 299. The initial node occupancies may be obtained from a traffic control entity (not shown) communicating with the vehicles 299, from sensors (not shown) detecting the positions of the vehicles 299, or from a reply to a self-positioning query issued to the vehicles 299. The optional information may be entered into the first interface 210 by an operator or provided as configuration data once it is known which vehicles 299 will form the fleet.

The device 200 further has a second interface 220 configured to feed commands selected from said predefined commands to said plurality of vehicles, as well as processing circuitry 230 configured to perform the method 100 described above. Figure 2 shows direct wireless links from the second interface 220 to the vehicles 299. In other embodiments, as explained above, the second interface 220 may instead feed sequences of the predefined commands to the traffic control entity, which takes care of the delivery of the commands to the vehicles 299.

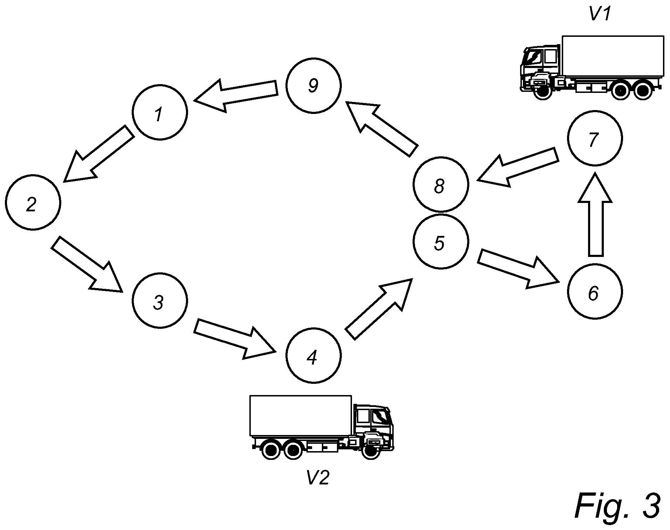

A possible behavior of the planning in step 114 is illustrated in figure 3, which shows a road network where two vehicles v1, v2 can move freely along the arrows between planning nodes (or waypoints) 1-9. There are no junctions; rather, the arrows define a circuit by which each vehicle traverses all nine planning nodes. If the inter-vehicle gaps are defined as the number of intervening planning nodes along the circuit, the gaps are given by

$$\big[\big(O(v1) - O(v2)\big) \bmod 9\big] - 1 \text{ and } \big[\big(O(v2) - O(v1)\big) \bmod 9\big] - 1,$$

where $O(\cdot)$ is the occupancy function introduced above. The vehicles v1, v2 are not allowed to occupy planning nodes 5 and 8 contemporaneously. (It is noted in passing that the road network shown in figure 3 would not be equivalent to a network where nodes 5 and 8 were combined into one; indeed, such a combined node "5+8" would not reflect the fact that a vehicle arriving from node 4 would always continue to node 6, and a vehicle reaching the combined node "5+8" from node 7 would continue to node 9.) Accordingly, when the vehicles v1, v2 are positioned as shown in figure 3, the following options are open to the traffic planner: (a) let v1 at move to node 8 and let v2 wait at node 4, or (b) let v2 mot to node 5 and let v1 wait at node 7. In terms of the occupancy function, the respective outcomes over epochs to, t1, t2, t3 are shown in Table 1:

| Table 1: Future node occupancies in figure 3 | | | | |
|---|---|---|---|---|
| | to | t1 | t2 | t3 |
| Option a | $\binom{7}{4}$ | $\binom{8}{4}$ | $\binom{9}{5}$ | $\binom{1}{6}$ |
| Option b | $\binom{7}{4}$ | $\binom{7}{5}$ | $\binom{8}{6}$ | $\binom{9}{7}$ |

It is seen that option a) will lead to a more even distribution of the inter-vehicle gaps at the final epoch t3. Unlike option b), it also does not allow the minimum gap to reach 1 for any epoch. Therefore, from the point of view of inter-vehicle gap balancing, option a) is perceived as the more advantageous one and is likely to be preferred by the traffic planner.

Figure 5 shows a truck 500, a bus 502 and a construction equipment vehicle 504. A fleet of vehicles of one or more of these types, whether they are autonomous or conventional, can be controlled in a centralized fashion using the method 100 or the device 200 described above.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A traffic planning method (100) for enabling the controlling of a plurality of vehicles (v1, v2, v3, v4), wherein each vehicle occupies one node in a shared set of planning nodes (wp1, wp2, ..., wp8) and is movable to other nodes along predefined edges between pairs of the nodes in accordance with a finite set of motion commands (v1.a1, vi.a2, v2.a1, v2.a2), the method comprising:

    obtaining (112) initial node occupancies of the vehicles; and
    determining (114) a sequence of motion commands by optimizing a state-action value function ($Q(s, a)$) which depends on node occupancies ($s$) and the motion commands ($a$) to be given,
    **characterized in that** the state-action value function includes at least one command-independent term ($Q_L(s)$), which penalizes node occupancies with too small inter-vehicle gaps, and at least one command-dependent term ($Q_S(s, a)$).

2. The method of claim 1, wherein, said determining (114) is executed repeatedly, and the command-dependent term ($Q_S(s, a)$) is updated (116) on the basis of a predefined reward function after each execution cycle of said determining (114).

3. The method of claim 2, wherein the command-independent term ($Q_L(s)$) is exempted from said updating (116).

4. The method of claim 2 or 3, wherein the reward function represents productivity minus cost.

5. The method of any of the preceding claims, wherein the command-independent term ($Q_L(s)$) penalizes an inter-vehicle gap expressed as a time separation of the vehicles in the respective vehicle's direction of movement.

6. The method of any of the preceding claims, wherein the command-independent term ($Q_L(s)$) depends on a gap-balancing indicator *(SoB(s))* which penalizes too small gaps and/or unevenly distributed gaps.

7. The method of claim 6, wherein the gap-balancing indicator *(SoB(s))* depends on a variability measure of the gap sizes, such as a standard deviation of the gap sizes.

8. The method of claim 6 or 7, wherein the command-independent term ($Q_L(s)$) includes a composition of the gap-balancing indicator *(SoB(s))* with at least one of the following functions:

   a rectified linear unit, ReLU, activation function ($Q_L(s)$ = *mReLU(SoB(s); thr, k)*,
   where 0 < *thr* ≤ 1, *k* > 0 are respectively a threshold and a slope ;
   a gaussian function $(Q_L(s) = Q_L^{min} e^{-\epsilon \cdot SoB(s)^2}$ , where $\epsilon$ > 0);
   a sigmoid function $(Q_L(s) = \frac{1}{1+e^{-\epsilon \cdot SoB(s)}}$ , where $\epsilon$ > 0).

9. The method of any of the preceding claims, further comprising obtaining the state-action value function by a preceding step of reinforcement learning (110), such as Q-learning or temporal-difference learning on the basis of a predefined reward function.

10. The method of any of the preceding claims, wherein said determining (114) of a sequence of motion commands is performed within a Dyna-2 algorithm (600).

11. The method of claim 10 referring to claim 9, wherein further said reinforcement learning (110) is performed within the Dyna-2 algorithm.

12. The method of any of the preceding claims, wherein the vehicles are autonomous vehicles.

13. A device (200) configured to control a plurality of vehicles (v1, v2, v3, v4), wherein each vehicle occupies one node in a shared set of planning nodes (wp1, wp2, ..., wp8) and is movable to other nodes along predefined edges between pairs of the nodes in accordance with a finite set of motion commands (v1.a1, v1.a2, v2.a1, v2.a2), the device comprising:

   a first interface (210) configured to receive initial node occupancies of the vehicles;
   a second interface (220) configured to feed motion commands selected from said finite set to said plurality of vehicles; and
   processing circuitry (230) configured to perform the method of any of the preceding claims.

14. A computer program comprising instructions which, when executed, cause the device of claim 13 to execute the method of any of claims 1 to 12

**Patentansprüche**

1. Verkehrsplanungsverfahren (100) zur Steuerung einer Vielzahl von Fahrzeugen (v1, v2, v3, v4), wobei jedes Fahrzeug einen Knoten in einem gemeinsam genutzten Satz von Planungsknoten (wp1, wp2, ..., wp8) belegt und entlang vordefinierter Linien zwischen Paaren der Knoten in Übereinstimmung mit einer begrenzten Anzahl von Fahrbefehlen (v1.a1, v1.a2, v2.a1, v2.a2) zu anderen Knoten bewegbar ist, das Verfahren umfassend:

   Erhalten (112) der anfänglichen Knotenbelegungen der Fahrzeuge; und

Bestimmen (114) einer Folge von Fahrbefehlen durch Optimieren einer Aktionswertfunktion **(Q(s, a))**, die von den Knotenbelegungen(s) und den zu erteilenden Fahrbefehlen (a) abhängt,

**dadurch gekennzeichnet, dass** die Aktionswertfunktion mindestens eine befehlsunabhängige Bedingung **($Q_L$(s))**, die Knotenbelegungen mit zu kleinen Fahrzeugabständen bestraft, und mindestens eine befehlsabhängige Bedingung **($Q_S$(s, a))** enthält.

2. Verfahren nach Anspruch 1, wobei das Bestimmen (114) wiederholt ausgeführt wird und die befehlsabhängige Bedingung **($Q_S$(s, a))** auf der Grundlage einer vordefinierten Belohnungsfunktion nach jedem Ausführungszyklus des Bestimmens (114) aktualisiert (116) wird.

3. Verfahren nach Anspruch 2, wobei die befehlsunabhängige Bedingung **($Q_L$(s))** von der genannten Aktualisierung (116) ausgenommen ist.

4. Verfahren nach Anspruch 2 oder 3, wobei die Belohnungsfunktion Produktivität minus Kosten darstellt.

5. Verfahren nach einem der vorhergehenden Ansprüche, wobei die befehlsunabhängige Bedingung **($Q_L$(s))** einen Abstand zwischen den Fahrzeugen, ausgedrückt als zeitlicher Abstand der Fahrzeuge in der jeweiligen Bewegungsrichtung, bestraft.

6. Verfahren nach einem der vorhergehenden Ansprüche, wobei die befehlsunabhängige Bedingung **($Q_L$(s))** von einem Lücken-Ausgleich-Indikator abhängt **(SoB(s))**, der zu kleine Lücken und/oder ungleichmäßig verteilte Lücken bestraft.

7. Verfahren nach Anspruch 6, wobei der Lücken-Ausgleich-Indikator **(SoB(s))** von einem Variabilitätsmaß der Lückengrößen abhängt, wie beispielsweise einer Standardabweichung der Lückengrößen.

8. Verfahren nach Anspruch 6 oder 7, wobei die befehlsunabhängige Bedingung **($Q_L$(s))** eine Zusammensetzung des Lücken-Ausgleich-Indikators **(SoB(s))** mit mindestens einer der folgenden Funktionen enthält:

eine gleichgerichtete lineare Einheit, ReLU, Aktivierungsfunktion **($Q_L$(s) = mReLU (SoB(s); thr, k)**, wobei **0 < thr ≤ 1, k > 0** ein Schwellenwert bzw. eine Steigung sind;

eine Gaußfunktion ( $Q_L(s) = Q_L^{min} e^{-\epsilon \cdot SoB(s)^2}$ , wo $\varepsilon > 0$) ist;

eine Sigmoidfunktion ( $Q_L(s) = \frac{1}{1+e^{-\epsilon \cdot SoB(s)}}$ , $\varepsilon > 0$) ist.

9. Verfahren nach einem der vorhergehenden Ansprüche, ferner umfassend das Erhalten der Aktionswertfunktion durch einen vorhergehenden Schritt des Verstärkungslernens (110), wie beispielsweise Q-Lernen oder Zeitdifferenzlernen auf der Grundlage einer vordefinierten Belohnungsfunktion.

10. Verfahren nach einem der vorhergehenden Ansprüche, wobei das Bestimmen (114) einer Folge von Fahrbefehlen innerhalb eines Dyna-2-Algorithmus (600) durchgeführt wird.

11. Verfahren nach Anspruch 10, der sich auf Anspruch 9 bezieht, wobei ferner das Verstärkungslernen (110) innerhalb des Dyna-2-Algorithmus durchgeführt wird.

12. Verfahren nach einem der vorhergehenden Ansprüche, wobei das Fahrzeug ein autonomes Fahrzeug ist.

13. Vorrichtung (200), die konfiguriert ist, um eine Vielzahl von Fahrzeugen (v1, v2, V3, v4) zu steuern, wobei jedes Fahrzeug einen Knoten in einem gemeinsam genutzten Satz von Planungsknoten (wp1, wp2, ..., wp8) belegt und entlang vordefinierter Linien zwischen Paaren der Knoten in Übereinstimmung mit einer begrenzten Anzahl von Fahrbefehlen (v1.a1, v1.a2, v2.a1, v2.a2) zu anderen Knoten bewegbar ist, die Vorrichtung umfassend:

eine erste Schnittstelle (210), die konfiguriert ist, um anfängliche Knotenbelegungen der Fahrzeuge zu empfangen;
eine zweite Schnittstelle (220), die konfiguriert ist, um Fahrbefehle, die aus der einer begrenzten Anzahl ausgewählt werden, an die Vielzahl von Fahrzeugen weiterzuleiten; und
eine Verarbeitungsschaltung (230), die konfiguriert ist, um das Verfahren nach einem der vorhergehenden Ansprüche durchzuführen.

14. Computerprogramm mit Anweisungen, die bei der Ausführung die Vorrichtung nach Anspruch 13 veranlassen, das Verfahren nach einem der Ansprüche 1 bis 12 auszuführen.

**Revendications**

1. Procédé d'organisation de trafic (100) destiné à permettre la commande d'une pluralité de véhicules (v1, v2, v3), chaque véhicule occupant un noeud dans un ensemble partagé de noeuds d'organisation (wp1, wp2, ..., wp8) et étant mobile vers d'autres noeuds le long de bords prédéfinis entre des paires de noeuds en fonction d'un ensemble fini de commandes de mouvement (v1.a1, v1.a2, v2.a1, v2.a2), ce procédé comprenant :

   l'obtention (112) d'occupations de noeuds initiales des véhicules ; et
   la détermination (114) d'une séquence de commandes de mouvement en optimisant une fonction de valeur actions-état ($Q(s,a)$) qui dépend d'occupations de noeuds s et des commandes de mouvement (a) à donner, **caractérisé en ce que** la fonction de valeur actions-état inclut au moins un terme indépendant de la commande ($Q_L(s)$) qui pénalise des occupations de noeuds avec des intervalles inter-véhicules trop réduits, et au moins un terme dépendant de la commande $(Qs(s,a))$.

2. Procédé selon la revendication 1, dans lequel ladite détermination (114) est exécutée à répétition et le terme dépendant de la commande $(Q_s(s,a))$ est actualisé sur la base d'une fonction de récompense prédéfinie après chaque cycle d'exécution de ladite détermination (114) .

3. Procédé selon la revendication 2, dans lequel le terme indépendant de la commande (QL(s)) est exempté de ladite actualisation (116).

4. Procédé selon la revendication 2 ou 3, dans lequel la fonction de récompense représente la productivité moins le coût.

5. Procédé selon l'une quelconque des revendications précédentes, dans lequel le terme indépendant de la commande ($Q_L(s)$) pénalise un intervalle inter-véhicules sous forme d'une séparation temporelle des véhicules dans le sens de mouvement respectif des véhicules.

6. Procédé selon l'une quelconque des revendications précédentes, dans lequel le terme indépendant de la commande ($Q_L(s)$) dépend d'un indicateur d'équilibrage d'intervalles $(SoB(s))$ qui pénalise les intervalles trop réduits et/ou les intervalles inégalement répartis.

7. Procédé selon la revendication 6, dans lequel l'indicateur d'équilibrage d'intervalles $(SoB (s))$ dépend d'une mesure de variabilité des tailles d'intervalles, comme une déviation standard des tailles d'intervalles.

8. Procédé selon la revendication 6 ou 7, dans lequel le terme indépendant de la commande ($Q_L(s)$) inclut une composition de l'indicateur d'équilibrage d'intervalles $(SoB(s))$ avec au moins une des fonctions suivantes :

   une fonction d'activation d'unité linéaire rectifiée ReLU ($QL(s = mReLU (SoB (s)$ ; thr, k) où $0 < thr \leq 1$, $k > 0$ sont respectivement un seuil et

   une fonction gaussienne de pente $Q_L(s) = Q_L^{min} e^{-\epsilon \cdot SoB(s)^2}$ , où e > 0),

   une fonction sigmoïde ($Q_L(s) = \frac{1}{1+e^{-\epsilon \cdot SoB(s)}}$ , où $\epsilon > 0$).

9. Procédé selon l'une quelconque des revendications précédentes, comprenant en outre l'obtention de la fonction de valeur actions-état par une étape précédente d'apprentissage de renforcement (110), comme un apprentissage de Q ou apprentissage de différence temporelle sur la base d'une fonction de récompense prédéfinie.

10. Procédé selon l'une quelconque des revendications précédentes, dans lequel ladite détermination (114) d'une séquence de commandes de mouvement est réalisée dans un algorithme Dyna-2 (600).

**11.** Procédé selon la revendication 10 ans en référence à la revendication 9, dans lequel ledit autre apprentissage de renforcement (110) est réalisé dans l'algorithme Dyna-2.

**12.** Procédé selon l'une quelconque des revendications précédentes, dans lequel les véhicules sont des véhicules autonomes.

**13.** Dispositif (200) configuré pour commander une pluralité de véhicules (v1, v2, v3), chaque véhicule occupant un noeud dans un ensemble partagé de noeuds d'organisation (wp1, wp2, ..., wp8) et étant mobile vers d'autres noeuds le long de bords prédéfinis entre des paires de noeuds en fonction d'un ensemble fini de commandes de mouvement (v1.a1, v1.a2, v2.a1, v2.a2), ce dispositif comprenant :

une première interface (210) configurée pour recevoir des occupations de noeuds initiales des véhicules ; et
une seconde interface (220) configurée pour fournir des commandes de mouvement sélectionnées dans ledit ensemble fini à ladite pluralité de véhicules ; et
un circuit de traitement (230) configuré pour réaliser le procédé selon l'une quelconque des revendications précédentes.

**14.** Programme informatique comprenant des instructions qui, une fois exécutées, amènent le dispositif selon la revendication 13 à exécuter le procédé selon l'une quelconque des revendications 1 à 12.

*100*

110

112

114

116

*Fig. 1*

Fig. 2

EP 4 113 241 B1

Fig. 3

*Fig. 4*

500

502

504

Fig. 5

*600*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020097022 A
- US 5488277 A
- WO 2015011661 A1
- EP 21175955

**Non-patent literature cited in the description**

- **V. DIGANI et al.** Coordination of multiple AGVs: a quadratic optimization method. *Autonomous Robots,* 2018, vol. 43 (3), 539-555
- **T. CHEN et al.** On the Shortest and Conflict-Free Path Planning of Multi-AGV System Based on Dijkstra Algorithm and the Dynamic Time-Window Method. *Advanced Materials Research,* 2013, vol. 645, 267-271
- **R. S. SUTTON et al.** Reinforcement Learning. MIT Press, 2018